# EUROPEAN PATENT SPECIFICATION

(11) **EP 4 553 622 B1**
(45) Date of publication and mention of the grant of the patent: **25.11.2026**
(21) Application number: 23851691.8
(22) Date of filing: 03.08.2023
(51) Int. Cl.: G06F 3/0354, G06F 3/041, G06F 3/04886, G06F 3/04883, G06F 3/038, G06F 3/0483, G06F 3/0485

(54) **USE METHOD AND APPARATUS BASED ON STYLUS**
VERWENDUNGSVERFAHREN UND VORRICHTUNG AUF DER BASIS EINES STIFTES
PROCÉDÉ D'UTILISATION ET APPAREIL BASÉS SUR UN STYLET

(30) Priority: 09.08.2022 CN 202210951471
(43) Date of publication of application: 14.05.2025
(60) Divisional application: 26212987.7
(73) Proprietor: Honor Device Co., Ltd., Shenzhen, Guangdong 518040 (CN)
(72) Inventor: ZHANG, Beihang, Shenzhen, Guangdong 518040 (CN)
(74) Representative: Isarpatent
(86) International application number: PCT/CN2023/111063
(87) International publication number: WO 2024/032470

(56) References cited:
- CN-A- 106 227 370
- CN-A- 110 045 843
- CN-A- 110 045 843
- CN-A- 110 347 269
- CN-A- 110 347 269
- CN-A- 114 461 129
- CN-A- 116 088 698
- DE-U1- 202013 103 197

## Description

### TECHNICAL FIELD

This application relates to the field of terminal technologies, and in particular, to a system comprising a stylus and an electronic device, and a stylus-based using method.

### BACKGROUND

With the popularization and development of the Internet, people's functional requirements for electronic devices are also becoming increasingly diverse. For example, to simplify a manner of using the electronic devices, styluses gradually become an important tool for inputting data into the electronic devices or controlling the electronic devices.

Generally, a stylus is wrapped with a touch film at a position close to a tip of the stylus, so that the stylus can realize functions such as controlling an electronic device based on a trigger operation performed by a user on the touch film, and the like.

However, accuracy of the foregoing stylus-based using method is low, affecting user experience of controlling the electronic device by using the stylus.

CN 106 227 370 A relates to a touch input device, in particular to a smart stylus. The smart stylus includes a touch terminal for performing touch input on a corresponding touch device, and the touch terminal can touch on the corresponding touch device. The smart stylus surface is provided with a touch area, and the touch area is provided with a touch sensor, and the touch sensor comprises a plurality of detecting units. The position of all the detecting units in the touch area is relatively fixed, so that the contact position of the human hand can be determined. The plurality of detecting units includes an upper detecting unit, a lower detecting unit, a left detecting unit, a middle detecting unit, and a right detecting unit. A distribution relationship of the contact position in the touch area can be used to determine a contact state of the smart stylus by the user, and the contact state includes a finger touch, a two-finger grip, and a three-finger grip. Further, it is disclosed that the related information processing system changes the touch effect and touch of the smart stylus on the corresponding touch device according to the contact position and the change relationship of the contact position with time. The touch function includes the thickness, color, style, position, and the like of the touch input handwriting, and the touch function includes page turning and selection, zooming, moving, deleting, and the like of the display content.

### SUMMARY

The application provides a system comprising a stylus and an electronic device, and a stylus-based using method, as defined in the appended claims, so that accuracy of operation identification can be improved by identifying trigger data in a first region where a touch film overlaps with a facet, thereby improving user experience of controlling an electronic device by using the stylus.

According to a first aspect, an embodiment of this application provides a stylus-based using method. A part or all of a body of the stylus is surrounded by a touch film. A facet is disposed on the body of the stylus. The touch film includes a first region. The first region is smaller than a body region covered by the touch film and the first region is located at a position in the facet. The method includes: When the stylus receives a first operation on the first region, the stylus identifies the first operation to obtain an identification result, and controls a target device based on the identification result. The target device establishes a communication connection to the stylus. In this way, accuracy of operation identification can be improved by identifying trigger data in the first region where the touch film overlaps with the facet, thereby improving user experience of controlling the target device by using the stylus.

The first region may be a preset region described in embodiments of this application. The target device may be an electronic device described in embodiments of this application.

In a possible implementation, when the first operation is a slide operation toward a position away from a tip of the stylus, the identification result indicates the target device to flip to a next page. Alternatively, when the first operation is a slide operation toward a position close to a tip of the stylus, the identification result indicates the target device to flip to a previous page. In this way, the stylus may control, based on a slide operation performed by a user on the first region, the target device to perform page flipping, so as to avoid a false touch caused when the user triggers another position of the touch film, thereby improving accuracy of controlling the target device by the user by using the stylus.

In a possible implementation, the method further includes: The stylus obtains status information of the stylus, where the status information of the stylus indicates an orientation of the tip of the stylus. That the stylus identifies the first operation to obtain an identification result, and controls a target device based on the identification result includes: The stylus identifies the first operation and the status information to obtain the identification result, and controls the target device based on the identification result. In this way, the stylus may perform page flipping control on the target device based on both the orientation of the tip of the stylus and the slide operation on the first region, so that the user can flexibly control the target device by using the stylus.

In a possible implementation, when the status information satisfies a preset condition and the first operation is a slide operation toward a position away from the tip of the stylus, the identification result indicates the target device to flip to a next page. Alternatively, when the status information does not satisfy a preset condition and the first operation is a slide operation toward a position away from the tip of the stylus, the identification result indicates the target device to flip to a previous page. Alternatively, when the status information satisfies a preset condition and the first operation is a slide operation toward a position close to the tip of the stylus, the identification result indicates the target device to flip to a previous page. Alternatively, when the status information does not satisfy a preset condition and the first operation is a slide operation toward a position close to the tip of the stylus, the identification result indicates the target device to flip to a next page. In this way, the stylus may perform page flipping control on the target device based on both the orientation of the tip of the stylus and the slide operation on the first region, so that the user can flexibly control the target device by using the stylus.

The preset condition may be that the tip faces up as described in embodiments of this application. The preset condition is not satisfied may be that the tip faces down as described in embodiments of this application.

In a possible implementation, the method includes: The stylus is switched from a first mode to a second mode. In the first mode, the stylus is capable of responding to a trigger operation at any position of the touch film. In the second mode, the stylus is capable of responding to a trigger operation in the first region, and does not respond to a trigger operation in the second region that is other than the first region and that is in the touch film. That the stylus receives a first operation on the first region includes: The stylus in the second mode receives the first operation on the first region. In this way, before controlling the target device, the stylus may be switched from the first mode to the second mode, and receive, in the second mode, an operation performed by the user on the first region, so as to avoid receiving, in the first mode, a false touch caused when the user performs the first operation on the first region.

The first mode may be a writing mode described in embodiments of this application. The second mode may be a page flipping stylus mode described in embodiments of this application.

In a possible implementation, the stylus includes a touch integrated circuit (IC) and a microcontroller unit (MCU). The method further includes: The MCU sends a first instruction to the touch IC, where the first instruction indicates the stylus to switch from the first mode to the second mode. The touch IC obtains, based on the second mode, first trigger data corresponding to the first operation, and sends the first trigger data to the MCU. That the stylus identifies the first operation includes: The MCU identifies the first trigger data. In this way, the touch IC in the stylus may obtain, based on the second mode, only the first trigger operation corresponding to the first operation, thereby reducing memory occupation caused by obtaining the trigger operation in the second region.

In a possible implementation, the stylus includes a touch IC and an MCU. The method further includes: The touch IC obtains second trigger data, and sends the second trigger data to the MCU. The second trigger data is trigger data for the touch film, and the second trigger data includes the first trigger data corresponding to the first operation. That the stylus identifies the first operation includes: The MCU identifies the first trigger data based on the second mode. In this way, the MCU in the stylus may receive the second trigger data sent by the touch IC, and screen out the first trigger data by using the second mode, so that accuracy of operation identification by the stylus based on the first trigger data can be improved.

In a possible implementation, that the stylus identifies the first operation to obtain an identification result, and controls a target device based on the identification result includes: The stylus identifies the first operation to obtain the identification result, and controls movement of a cursor in the target device and/or a change of a page of the target device based on the identification result. In this way, the stylus can not only implement page flipping on the target device, but also control the movement of the cursor and the change of the page of the target device, thereby improving flexibility of controlling the target device.

According to a second aspect, as described but not claimed, an embodiment of this application provides a stylus-based using apparatus. A part or all of a body of the stylus is surrounded by a touch film. A facet is disposed on the body of the stylus. The touch film includes a first region. The first region is smaller than a body region covered by the touch film and the first region is located at a position in the facet. When a processing unit receives a first operation on the first region, an identification unit is configured to identify the first operation to obtain an identification result, and the processing unit is configured to control a target device based on the identification result. The target device establishes a communication connection to the stylus.

In a possible implementation, when the first operation is a slide operation toward a position away from a tip of the stylus, the identification result indicates the target device to flip to a next page. Alternatively, when the first operation is a slide operation toward a position close to a tip of the stylus, the identification result indicates the target device to flip to a previous page.

In a possible implementation, the processing unit is further configured to obtain status information of the stylus, where the status information of the stylus indicates an orientation of the tip of the stylus. The identification unit is further configured to identify the first operation and the status information to obtain an identification result. The processing unit is further configured to control the target device based on the identification result.

In a possible implementation, when the status information satisfies a preset condition and the first operation is a slide operation toward a position away from the tip of the stylus, the identification result indicates the target device to flip to a next page. Alternatively, when the status information does not satisfy a preset condition and the first operation is a slide operation toward a position away from the tip of the stylus, the identification result indicates the target device to flip to a previous page. Alternatively, when the status information satisfies a preset condition and the first operation is a slide operation toward a position close to the tip of the stylus, the identification result indicates the target device to flip to a previous page. Alternatively, when the status information does not satisfy a preset condition and the first operation is a slide operation toward a position close to the tip of the stylus, the identification result indicates the target device to flip to a next page.

In a possible implementation, the processing unit is further configured to be switched from a first mode to a second mode. In the first mode, the stylus is capable of responding to a trigger operation at any position of the touch film. In the second mode, the stylus is capable of responding to a trigger operation in the first region, and does not respond to a trigger operation in the second region that is other than the first region and that is in the touch film. The processing unit is further configured to receive the first operation on the first region in the second mode.

In a possible implementation, the stylus includes a touch integrated circuit (IC) and a microcontroller unit (MCU). The processing unit is further configured to send a first instruction to the touch IC, where the first instruction indicates the stylus to switch from the first mode to the second mode. The processing unit is further configured to obtain, based on the second mode, first trigger data corresponding to the first operation, and send the first trigger data to the MCU. The processing unit is further configured to identify the first trigger data.

In a possible implementation, the stylus includes a touch IC and an MCU. The processing unit is further configured to obtain second trigger data, and send the second trigger data to the MCU. The second trigger data is trigger data for the touch film, and the second trigger data includes the first trigger data corresponding to the first operation. The processing unit is further configured to identify the first trigger data based on the second mode.

In a possible implementation, the identification unit is further configured to identify the first operation to obtain an identification result. The processing unit is further configured to control movement of a cursor in the target device and/or change of a page of the target device based on the identification result.

According to a third aspect, as described but not claimed, an embodiment of this application provides a stylus, including a memory, a processor, and a computer program that is stored in the memory and that can run on the processor. When the processor executes the computer program, the stylus is enabled to perform the method according to any one of the first aspect or the possible implementations of the first aspect.

According to a fourth aspect, as described but not claimed, an embodiment of this application provides a computer-readable storage medium. The computer-readable storage medium stores a computer program. When the computer program is executed by a processor, a computer is enabled to perform the method according to any one of the first aspect or the possible implementations of the first aspect.

According to a fifth aspect, as described but not claimed, an embodiment of this application provides a computer program product, including a computer program. When the computer program is executed, a computer is enabled to perform the method according to any one of the first aspect or the possible implementations of the first aspect.

According to a sixth aspect, an embodiment of this application provides a system, including a stylus and a target device. The target device establishes a communication connection to the stylus. A part or all of a body of the stylus is surrounded by a touch film. A facet is disposed on the body of the stylus. The touch film includes a first region. The first region is smaller than a body region covered by the touch film and the first region is located at a position in the facet. The stylus is configured to: when receiving a first operation on the first region, identify the first operation to obtain an identification result. The stylus is further configured to send the identification result to the target device. The target device is configured to: receive the identification result, and control the target device based on the identification result.

It should be understood that technical solutions of the third aspect to the sixth aspect of this application correspond to the technical solution of the first aspect of this application, and beneficial effects achieved in the aspects and corresponding feasible implementations are similar. Details are not described again.

### BRIEF DESCRIPTION OF THE DRAWINGS

FIG. 1 is a schematic diagram of a scenario according to an embodiment of this application;
FIG. 2 is a schematic diagram of a touch film of a stylus according to an embodiment of this application;
FIG. 3 is a schematic diagram of grip postures according to an embodiment of this application;
FIG. 4 is a schematic diagram of a hardware structure of a stylus according to an embodiment of this application;
FIG. 5 is a schematic diagram of a hardware structure of an electronic device according to an embodiment of this application;
FIG. 6 is a schematic diagram of a touch film of another stylus according to an embodiment of this application;
FIG. 7 is a schematic flowchart of a stylus-based using method according to an embodiment of this application;
FIG. 8 is a schematic diagram of interfaces for enabling a page flipping stylus mode according to an embodiment of this application;
FIG. 9 is a schematic diagram of scenarios in which a laser pointer is simulated based on a stylus according to an embodiment of this application;
FIG. 10 is a schematic diagram of scenarios in which page flipping is controlled based on a laser pointer according to an embodiment of this application;
FIG. 11 is a schematic diagram of other scenarios in which page flipping is controlled based on a stylus according to an embodiment of this application;
FIG. 12 is a schematic diagram of a structure of a stylus-based using apparatus according to an embodiment of this application; and
FIG. 13 is a schematic diagram of a hardware structure of another stylus according to an embodiment of this application.

### DESCRIPTION OF EMBODIMENTS

To clearly describe technical solutions in embodiments of this application, terms such as "first" and "second" are used in embodiments of this application to distinguish between same items or similar items that provide basically same functions or purposes. For example, a first value and a second value are merely used to distinguish between different values, and are not intended to limit a sequence thereof. A person skilled in the art may understand that the terms such as "first" and "second" do not limit a quantity or an execution sequence, and the terms such as "first" and "second" do not indicate a definite difference.

It should be noted that in this application, the word such as "example" or "for example" is used to represent giving an example, an illustration, or a description. Any embodiment or design scheme described as an "example" or "for example" in this application should not be construed as being preferred or more advantageous than another embodiment or design scheme. To be precise, the use of the words such as "exemplary" or "for example" is intended to present a related concept in a specific manner.

In this application, "at least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

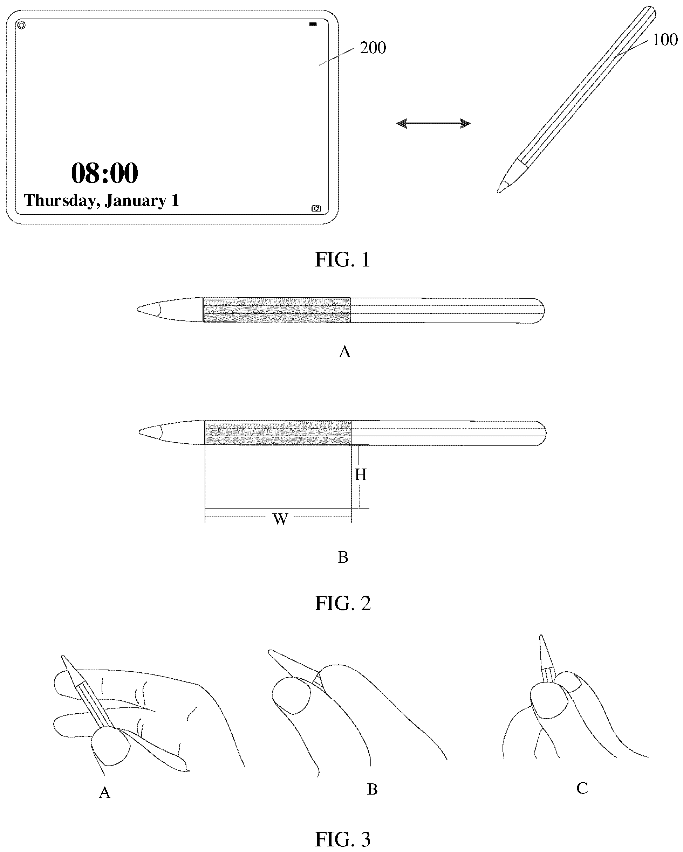

For example, FIG. 1 is a schematic diagram of a scenario according to an embodiment of this application. In the embodiment corresponding to FIG. 1, an example in which an electronic device is a tablet is used for description. This example shall not be construed as a limitation on embodiments of this application.

As shown in FIG. 1, the scenario may include an electronic device 200 and a stylus 100. The stylus 100 may be configured to input data to the electronic device 200, or may be configured to control the electronic device 200.

Generally, both the stylus 100 and the electronic device 200 may support two operation modes, for example, a writing mode and a page flipping stylus mode. The writing mode may be a default mode of the stylus 100. In the writing mode, a user may perform writing in a touchscreen of the electronic device 200 by using the stylus 100, so as to input data to the electronic device 200. In the page flipping stylus mode, page flipping control of the electronic device 200 may be implemented based on an operation performed by the user gripping and sliding the stylus 100 up and down (or left and right) in the touch film.

It may be understood that the touch film may be a component that surrounds a front end of the stylus and that is configured to receive a trigger operation performed by the user. For example, the touch film may be configured to receive an operation performed by the user sliding up and down (or left and right) in the page flipping stylus mode.

For example, FIG. 2 is a schematic diagram of a touch film of a stylus according to an embodiment of this application. As shown in a in FIG. 2, a front end that is of the stylus and that is at a position close to a tip of the stylus is surrounded by the touch film. The touch film may be a position corresponding to a gray region shown in a in FIG. 2. As shown in b in FIG. 2, when the touch film is unfolded, the touch film may be a rectangular region with a width of W and a height of H.

Generally, after a user triggers the touch film, the stylus may receive and identify operation data at any position in the touch film. For example, in a page flipping stylus mode, a grip posture at which the user triggers the stylus is described by using an example in which the user implements page flipping control on an electronic device based on the stylus. For example, FIG. 3 is a schematic diagram of grip postures according to an embodiment of this application. It may be understood that a stylus may implement page flipping control on an electronic device based on identification of the grip posture for a touch film in any one of a in FIG. 3, b in FIG. 3, or c in FIG. 3.

However, because the grip posture at which the user triggers the touch film varies, the stylus is prone to mistakenly considering that trigger of the touch film by a palm or a finger of the user is a page flipping operation in the page flipping stylus mode, resulting in low accuracy of trigger operation identification by the stylus, and affecting user experience of controlling the electronic device by using the stylus.

In view of this, this embodiment of this application provides a stylus-based using method. The stylus is surrounded by the touch film at a position close to a tip of the stylus. The stylus receives a first operation on the touch film. In response to the first operation, the stylus identifies an operation in the first region of the touch film to obtain an identification result, so that a false touch caused when the user triggers another position of the touch film can be avoided based on the identification of the operation in the first region by the stylus, and accuracy of controlling the electronic device by the user by using the stylus is improved. The first region is smaller than a region corresponding to the touch film.

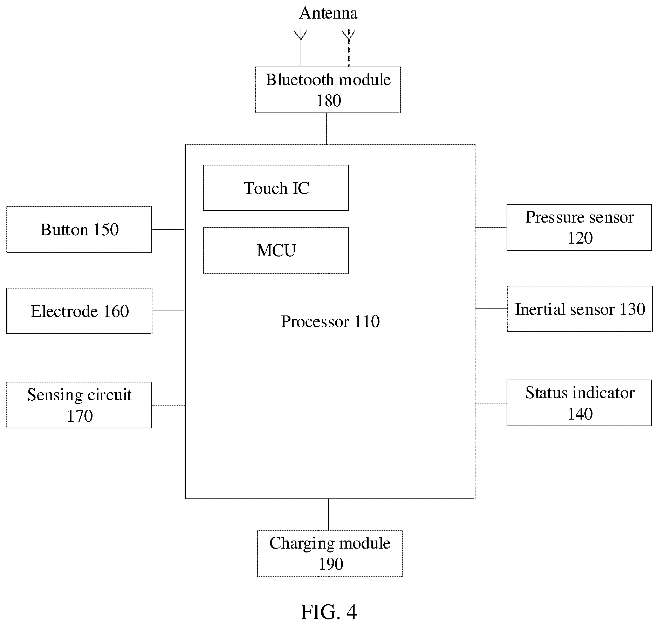

For example, FIG. 4 is a schematic diagram of a hardware structure of a stylus according to an embodiment of this application.

The stylus may also be referred to as a handwriting stylus, a capacitive stylus, an inductive stylus, or the like. As shown in FIG. 4, the stylus 100 may include a processor 110. The processor 110 may include storage and processing circuits for supporting an operation of the stylus 100. The storage and processing circuits may include storage apparatuses such as a non-volatile memory (for example, a flash memory or another electrically programmable read-only memory configured as a solid-state drive), a volatile memory (for example, a static or dynamic random access memory), and the like. The processing circuit in the processor 110 may be configured to control the operation of the stylus 100. The processing circuit may be implemented based on one or more microprocessors, a microcontroller, a digital signal processor, a baseband processor, a power management unit, an audio chip, an application specific integrated circuit, or the like.

It may be understood that the processor 110 may include modules such as a touch integrated circuit (integrated circuit, IC) and a microcontroller unit (microcontroller unit, MCU).

The touch IC may be configured to obtain a trigger operation in a touch film. The MCU is configured to: determine an operation mode of the stylus, and identify the trigger operation based on the operation mode.

The stylus 100 may include one or more sensors. For example, the sensor may include a pressure sensor 120. The pressure sensor 120 may be disposed at a writing end of the stylus 100. Certainly, the pressure sensor 120 may alternatively be disposed in a rod 20 of the stylus 100. In this way, after one end of a tip of the stylus 100 is subject to force, the other end of the tip moves to apply the force to the pressure sensor 120. In an embodiment, the processor 110 may adjust a line thickness of the tip of the stylus 100 when writing based on pressure detected by the pressure sensor 120.

The sensor may further include an inertial sensor 130. The inertial sensor 130 may include a three-axis accelerometer and a three-axis gyroscope sensor, and/or other components for measuring movement of the stylus 100. For example, a three-axis magnetometer may be included in the sensor through a configuration of a nine-axis inertial sensor. In this embodiment of this application, the gyroscope sensor may be configured to detect an orientation of the tip of the stylus 100. For example, the gyroscope sensor may be configured to detect the orientation of the tip of the stylus, and be configured to detect a status in which the tip of the stylus faces down, or the like.

The sensor may further include additional sensors such as a temperature sensor, an ambient light sensor, a light-based proximity sensor, a contact sensor, a magnetic sensor, a pressure sensor, and/or another sensor.

The stylus 100 may include a status indicator 140 such as a light-emitting diode, and a button 150. The status indicator 140 is configured to prompt a user of a status of the stylus 100. The button 150 may include a mechanical button and a non-mechanical button, and the button 150 may be configured to collect button press information from the user.

In this embodiment of this application, the stylus 100 may include one or more electrodes 160. One of the electrodes 160 may be located at the writing end of the stylus 100, and one of the electrodes 160 may be located in the tip. Refer to the foregoing related description.

The stylus 100 may include a sensing circuit 170. The sensing circuit 170 may sense capacitive coupling between the electrode 160 and a drive line of a capacitive touch sensor panel that performs interaction with the stylus 100. The sensing circuit 170 may include an amplifier configured to receive a capacitance reading from the capacitive touch sensor panel, a clock configured to generate a demodulation signal, a phase shifter configured to generate a phase-shifted demodulation signal, a mixer configured to demodulate the capacitance reading by using an in-phase demodulation frequency component, a mixer configured to demodulate the capacitance reading by using a quadrature demodulation frequency component, and the like. A demodulation result of the mixer may be used for determining amplitude proportional to capacitance, so that the stylus 100 can sense contact with the capacitive touch sensor panel.

It may be understood that, according to an actual requirement, the stylus 100 may include a microphone, a speaker, an audio generator, a vibrator, a camera, a data port, and another device. The user may use these devices to provide a command to control the operation of the stylus 100 and an operation of an electronic device 200 that performs interaction with the stylus 100, and receive status information and another output.

The processor 110 may be configured to run software that is on the stylus 100 and that controls the operation of the stylus 100. During an operation process of the stylus 100, the software running on the processor 110 may process a sensor input, a button input, and an input from another apparatus, to monitor movement of the stylus 100 and another user input. The software running on the processor 110 may detect a user command and may communicate with the electronic device 200.

To support wireless communication between the stylus 100 and the electronic device 200, the stylus 100 may include a wireless module. In FIG. 4, an example in which the wireless module is a Bluetooth module 180 is used for description. The wireless module may alternatively be a Wi-Fi hotspot module, Wi-Fi point-to-point module, or the like. The Bluetooth module 180 may include a radio frequency transceiver, for example, a transceiver. The Bluetooth module 180 may alternatively include one or more antennas. The transceiver may transmit and/or receive a wireless signal through the antenna. Based on a type of the wireless module, the wireless signal may be a Bluetooth signal, a wireless local area network signal, a remote signal such as a cellular phone signal, a near field communication signal, or another wireless signal.

The stylus 100 may further include a charging module 190. The charging module 190 may support charging of the stylus 100 and supply power to the stylus 100.

It should be understood that, the electronic device 200 in this embodiment of this application may be referred to as user equipment (user equipment, UE), a terminal (terminal), or the like. For example, the electronic device 200 may be a mobile terminal or a fixed terminal with a touchscreen, such as a tablet computer (portable Android device, PAD), a personal digital assistant (personal digital assistant, PDA), a handheld device with a wireless communication function, a computing device, an in-vehicle device or a wearable device, a virtual reality (virtual reality, VR) electronic device, an augmented reality (augmented reality, AR) electronic device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home). A form of the electronic device is not specifically limited in this embodiment of this application.

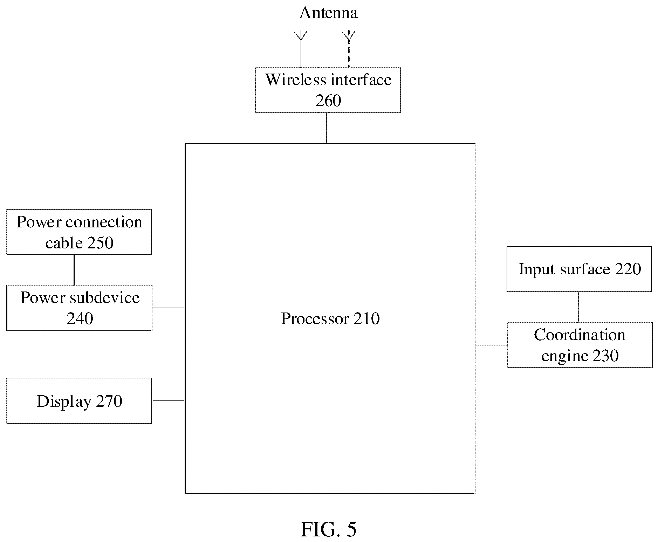

For example, FIG. 5 is a schematic diagram of a hardware structure of an electronic device according to an embodiment of this application.

Refer to FIG. 5. The electronic device 200 may include a plurality of subsystems. The subsystems cooperate to perform, coordinate, or monitor one or more operations or functions of the electronic device 202. The electronic device 200 includes a processor 210, an input surface 220, a coordination engine 230, a power subsystem 240, a power connector 250, a wireless interface 260, and a display 270.

For example, the coordination engine 230 may be configured to: communicate with another subsystem of the electronic device 200 and/or process data; communicate with and/or transact data with a stylus 100; measure and/or obtain one or more outputs of one or more analog or digital sensors (for example, touch sensors); measure and/or obtain one or more outputs of one or more sensor nodes in a sensor node array (for example, a capacitive sensing node array); receive and position a tip signal and a ring signal from the stylus 100; and position the stylus 100 based on positions of a tip signal crossing region and a ring signal crossing region, and the like.

The processor 210 may be configured to receive a control instruction from the stylus, and the control instruction may indicate the electronic device 200 to execute corresponding control. In this embodiment of this application, when the stylus receives a trigger operation performed by a user in a preset region, the stylus may identify the trigger operation, and send a control instruction corresponding to an identification result to the electronic device 200, so that the electronic device 200 can execute the control instruction. For example, the electronic device 200 may perform page flipping control based on the control instruction.

Generally, the processor 210 may be configured to execute, coordinate, and/or manage functions of the electronic device 200. Such functions may include but are not limited to: communicating with and/or transacting data with another subsystem of the electronic device 200, communicating with and/or transacting data with the stylus 100, performing data communication and/or transacting data through a wireless interface, performing data communication and/or transacting data through a wired interface, facilitating exchange of power through a wireless (for example, inductive or resonant) or wired interface, receiving a position and an angular position of one or more styluses, and the like.

The processor 210 may be implemented as any electronic device capable of processing, receiving, or sending data or instructions. For example, the processor may be a microprocessor, a central processing unit, an application specific integrated circuit, a field programmable gate array, a digital signal processor, an analog circuit, a digital circuit, or a combination of these devices. The processor may be a single-thread processor or a multi-thread processor. The processor may be a single-core processor or multi-core processor.

During use, the processor 210 may be configured to access a memory storing instructions. The instructions may be configured to cause the processor to execute, coordinate, or monitor one or more operations or functions of the electronic device 200.

The instructions stored in the memory may be configured to control or coordinate operations of other components of the electronic device 200. The components are such as, but not limited to: another processor, an analog or digital circuit, a volatile or non-volatile memory module, a display, a speaker, a microphone, a rotary input device, a button or another physical input device, a biometric authentication sensor and/or system, a force or touch input/output component, a communication module (such as a wireless interface and/or a power connector), and/or a haptic feedback device.

The memory may further store electronic data that can be used by the stylus or the processor. For example, the memory may store electronic data or content (such as a media file, a document, and an application), device settings and preferences, a timing signal and a control signal or data, data structures, or databases for various modules, a file or a configuration related to detecting the tip signal and/or the ring signal, and the like. The memory may be configured as any type of memory. For example, the memory may be implemented as a random access memory, a read-only memory, a flash memory, a removable memory, another type of storage element, or a combination of such devices.

In this embodiment of this application, the memory may further the stylus that has been connected to the electronic device 200 and corresponding operation modes and duration of use in different operation modes of the stylus, so that when establishing a connection to the stylus next time, the electronic device may send an operation mode with longest duration of use to the stylus, to avoid frequent switching of operation modes of the stylus.

The electronic device 200 further includes a power subsystem 240. The power subsystem 240 may include a battery or another power supply. The power subsystem 240 may be configured to supply power to the electronic device 200. The power subsystem 240 may be further coupled to the power connector 250.

The electronic device 200 further includes the wireless interface 260, to facilitate electronic communication between the electronic device 200 and the stylus 100. In this embodiment of this application, the electronic device 200 may be configured to through a low-energy Bluetooth communication interface, for example, the electronic device 200 may receive the identification result from the stylus through the wireless interface 260.

In some embodiments, the electronic device 200 may alternatively communicate with the stylus 100 through a near field communication interface. In another example, a communication interface facilitates electronic communication between the electronic device 200 and an external communication network, a device, or a platform.

The wireless interface 260 (regardless of whether the wireless interface 260 is a communication interface between the electronic device 200 and the stylus 100 or another communication interface) may be implemented as one or more wireless interfaces, Bluetooth interfaces, near field communication interfaces, magnetic interfaces, universal serial bus interfaces, inductive interfaces, resonant interfaces, capacitive coupling interfaces, Wi-Fi interfaces, TCP/IP interfaces, network communication interfaces, optical interfaces, acoustic interfaces, or any conventional communication interfaces.

The electronic device 200 further includes the display 270. The display 270 may be located behind the input surface 220, or may be integrated with the input surface 220. The processor 210 may present information to the user by using the display 270. In many cases, the processor 210 uses the display 270 to present an interface with which the user can perform interaction. In many cases, the user manipulates the stylus 100 to perform interaction with the interface. In this embodiment of this application, the display 270 may display an interface that is controlled by the stylus.

It is appreciated by a person skilled in the art that some of the foregoing specific details presented by the electronic device 200 may not be required to practice the particular implementation solutions or equivalents thereof. Similarly, another electronic device may include a larger quantity of subsystems, modules, components, and the like. When appropriate, some submodules may be implemented as software or hardware. Therefore, it should be understood that the foregoing descriptions are not intended to be exhaustive or to limit the disclosure to the exact form in this specification. On the contrary, it is apparent to a person of ordinary skill in the art that, many modifications and variations are possible according to the foregoing teachings.

The following describes the technical solutions of this application and how to resolve the foregoing technical problems according to the technical solutions of this application in detail by using specific embodiments. The following several specific embodiments may be independently implemented, and may also be combined with each other, and the same or similar concepts or processes may not be described repeatedly in some embodiments.

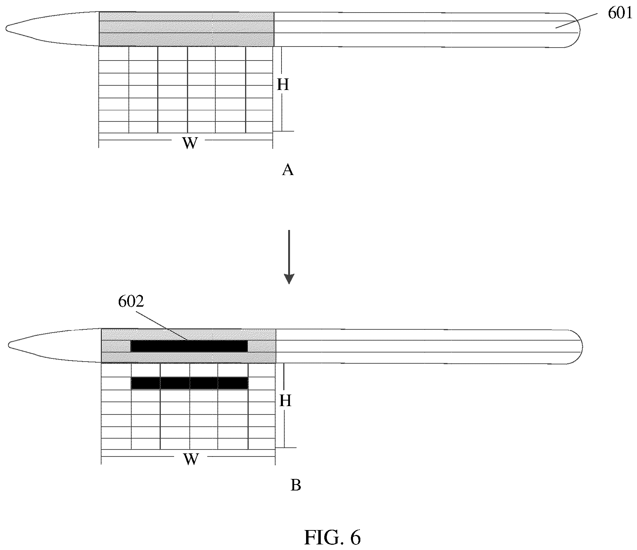

In an embodiment of this application, an example of a touch film that surrounds a front end of a stylus is described. For example, FIG. 6 is a schematic diagram of a touch film of another stylus according to an embodiment of this application. In the embodiment corresponding to FIG. 6, at least one facet 601 may be disposed on a body of the stylus. A preset region 602 (or may also be referred to as a first region) is disposed at a position that is of the facet 601 and that is close to a tip of the stylus. The preset region 602 corresponding to the position of the facet 601 may be used to receive a trigger operation performed by a user on the preset region 602 when the stylus is in a page flipping stylus mode.

The facet is a plane without an arc, and extends longitudinally along the body of the stylus. The facet may indicate a position of the body of the stylus. When using the stylus, the user may quickly distinguish between a facet region and a non-facet region by simply gripping the stylus.

As shown in a in FIG. 6, the stylus may divide a touch film with a width of W and a height of H into a plurality of channels of a size such as 6×6, and identify the trigger operation in the page flipping stylus mode based on a trigger operation that is performed by the user on the preset region 602 of a size such as 1×4 and that is on a facet shown in b in FIG. 6, so as to control an electronic device by using an identification result.

The preset region 602 of the size such as 1×4 may satisfy a size of a finger when the user performs single finger trigger. It may be understood that in this way, a false touch caused when a plurality of fingers perform trigger in the preset region 602 can be avoided, and accuracy of operation identification is improved.

In a possible implementation, the size of the preset region 602 at the position in the facet may alternatively be a size such as 1×3, 1×5, 1×6, or the like.

It may be understood that the preset region may be understood as a strip region disposed at the facet of the body of the stylus. The size of the preset region may be related to a size of a grid that is caused by division of the touch film, a size of the facet, and a size of a finger. For example, when the touch film is divided into 12×12 grids, the size of the preset region 602 may be a size such as 2×6, 2×7, 3x7, or the like. This is not limited in embodiments of this application.

It may be understood that the 6×6 size division of the touch film and the size 1×4 corresponding to the preset region are merely used as examples. These examples shall not be construed as a limitation on embodiments of this application. For example, when the touch film is divided into a plurality of 5×5 channels, the size of the preset region may alternatively be 1×3, 1x4, 1×5, or the like. Alternatively, when the touch film is divided into a plurality of 7×7 channels, the size of the preset region may be 1×3, 1x4, 1x5, 1×6, 1x7, or the like. This is not limited in embodiments of this application.

It may be understood that, to prevent the stylus from identifying a trigger operation at any position in the touch film, which makes accuracy of identifying the trigger operation performed by the user low, the stylus may identify a trigger operation on the preset region that is at the position in the facet and that is in the touch film, and ignore a trigger operation at another position that is other than the preset region and that is in the touch film, so as to reduce a false touch condition, and further improve accuracy of trigger operation identification by the stylus.

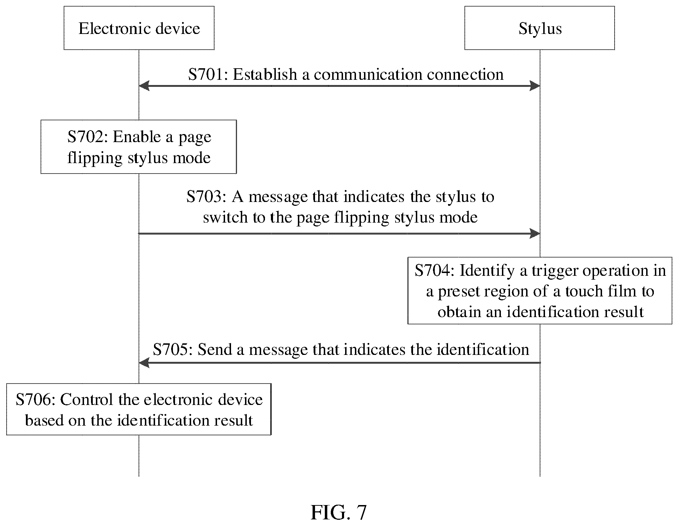

Based on the embodiment corresponding to FIG. 6, an embodiment of this application provides a stylus-based using method. For example, FIG. 7 is a schematic flowchart of a stylus-based using method according to an embodiment of this application. In the embodiment corresponding to FIG. 7, the stylus-based using method may relate to an electronic device and the stylus. An example in which the electronic device may be a tablet and the stylus includes a touch IC and an MCU is used for description. This example shall not be construed as a limitation on embodiments of this application.

As shown in FIG. 7, the stylus-based using method may include the following steps.

S701: The electronic device establishes a communication connection to the stylus.

The stylus and the electronic device may be interconnected through a communication network to realize wireless signal interaction. The communication network may be but is not limited to a short-distance communication network such as a Wi-Fi hotspot network, a Wi-Fi peer-to-peer (peer-to-peer, P2P) network, a Bluetooth network, a zigbee network, or a near field communication (near field communication, NFC) network. This is not limited in embodiments of this application.

It may be understood that, in this embodiment of this application, an example in which the stylus establishes a Bluetooth connection to the electronic device is used for description.

S702: The electronic device enables a page flipping stylus mode.

It may be understood that, because the stylus enters a writing mode by default when the stylus is started, the page flipping stylus mode may be enabled by using a trigger operation performed by a user on the electronic device.

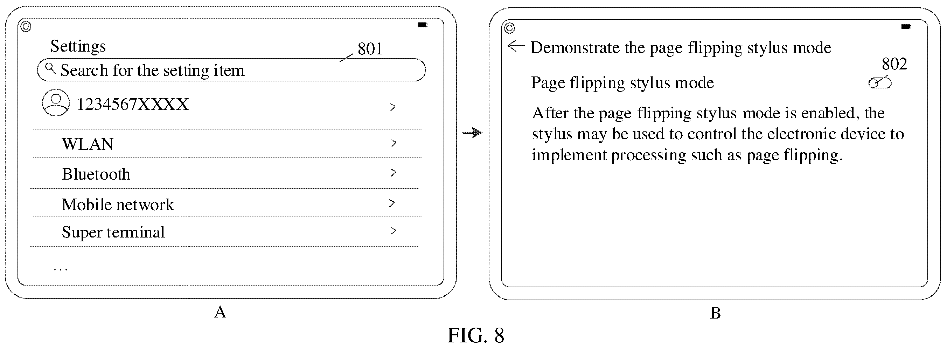

For example, FIG. 8 is a schematic diagram of interfaces for enabling a page flipping stylus mode according to an embodiment of this application.

When the electronic device receives an operation of enabling a setting function by the user, the electronic device may display an interface shown in a in FIG. 8. In the interface shown in a in FIG. 8, the interface may include a text box 801 for searching for a setting item, a control for viewing account information, a control for setting a WLAN, a control for setting Bluetooth, a control for setting a mobile network, a control for viewing a super terminal, and the like. The account information may be 1234567XXXX. The operation of opening the setting function by the user may be a trigger operation performed by the user on a control corresponding to the setting function in a desktop of the electronic device, may be a trigger operation performed by the user on a thumbnail corresponding to the setting function in a multi-task background interface of the electronic device, may be a voice operation, or the like. This is not limited in embodiments of this application. The trigger operation may be a tap operation, a long press operation, a slide operation, a voice operation, another gesture operation, or the like. This is not limited in embodiments of this application.

In the interface shown in a in FIG. 8, when the electronic device receives that the user inputs and searches for "Demonstrate the page flipping stylus mode" in the text box 801 for searching for the setting item, the electronic device may open a function interface corresponding to "Demonstrate the page flipping stylus mode", and display an interface shown in b in FIG. 8. In the interface shown in b in FIG. 8, the interface may include a control 802 for enabling the page flipping stylus mode, and prompt information corresponding to enabling the page flipping stylus. The prompt information may be displayed as follows: After the page flipping stylus mode is enabled, the stylus may be used to control the electronic device to implement functions such as page flipping.

In the interface shown in b in FIG. 8, when the page flipping stylus mode is in a disabled status and when the electronic device receives a trigger operation performed by the user on the control 802 for enabling the page flipping stylus mode, the electronic device may perform the step shown in S703.

In a possible implementation, the stylus may alternatively enable the page flipping stylus mode based on a trigger operation performed by the user on the stylus that is in a writing mode. For example, the stylus may be switched from the writing mode to the page flipping stylus mode based on a plurality of tap operations performed by the user on the touch film, or based on operations such as pressing a tip of the stylus by the user for a long time or for a plurality of times, so that the stylus performs the step shown in S703.

S703: The electronic device sends, to the stylus, a message that indicates the stylus to switch to the page flipping stylus mode.

For example, when the electronic device implements a communication connection with the stylus through Bluetooth, the electronic device may send, to the stylus through Bluetooth or the like, the message that indicates the stylus to switch to the page flipping stylus mode. Accordingly, the stylus may receive the message that is sent by the electronic device and that indicates the stylus to switch to the page flipping stylus mode.

S704: When the stylus receives a trigger operation performed by the user on the touch film, the stylus identifies a trigger operation in a preset region of the touch film to obtain an identification result.

In this embodiment of this application, when the stylus receives the trigger operation performed by the user on the touch film, the stylus may identify the trigger operation in the preset region of the touch film in the following two manners.

In an implementation, when the stylus receives the message that is from the electronic device and that indicates the stylus to switch to the page flipping stylus mode, an MCU in the stylus may send an indication message that includes the page flipping stylus mode to the touch IC, to indicate the touch IC to receive only the trigger operation corresponding to the preset region. Further, the touch IC may send, to the MCU, trigger data corresponding to the trigger operation received in the preset region, and the MCU identifies the trigger data to obtain an identification result. The trigger data may include a position corresponding to the trigger operation, a capacitance value change during the trigger, and the like.

The touch IC may enable, based on the indication message that indicates the page flipping stylus mode, only some channels corresponding to the preset region to receive the trigger operation, so that the touch IC can receive the trigger operation corresponding to the preset region, to obtain the trigger data corresponding to the trigger operation.

It may be understood that, even if the user triggers a region that is other than the preset region and that is in the touch film, the touch IC cannot identify a trigger operation performed by the user.

In another implementation, the touch IC may normally receive a trigger operation performed by the user at any position of the touch film, and send trigger data corresponding to the trigger operation to the MCU. The MCU may identify, based on the received message that indicates the stylus to switch to the page flipping stylus mode, the trigger data corresponding to the preset region, to obtain an identification result. Alternatively, it may be understood that the MCU may filter out the trigger data of the region that is other than the preset region and that is in the touch film.

The touch IC may send the trigger data and a channel corresponding to the trigger data to the MCU together, so that the MCU can identify, based on the message that indicates the stylus to switch to the page flipping stylus mode, the trigger data on the channel in which the preset region is located, to obtain the identification result.

For a meaning of the preset region, refer to the descriptions of the embodiment corresponding to FIG. 6. Details are not described herein again.

S705: The stylus sends, to the electronic device, a message that indicates the identification result.

For example, the stylus may alternatively send, in a Bluetooth-based manner to the electronic device, the message that indicates the identification result. Accordingly, the electronic device may receive the identification result sent by the stylus.

S706: The electronic device controls the electronic device based on the identification result.

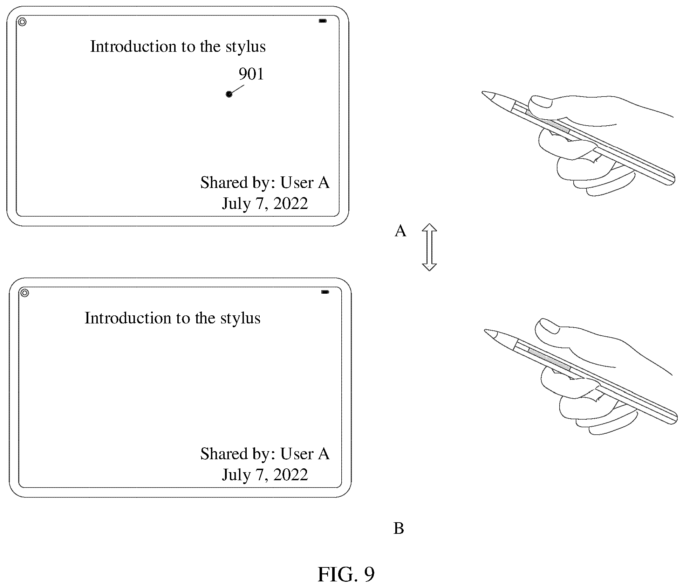

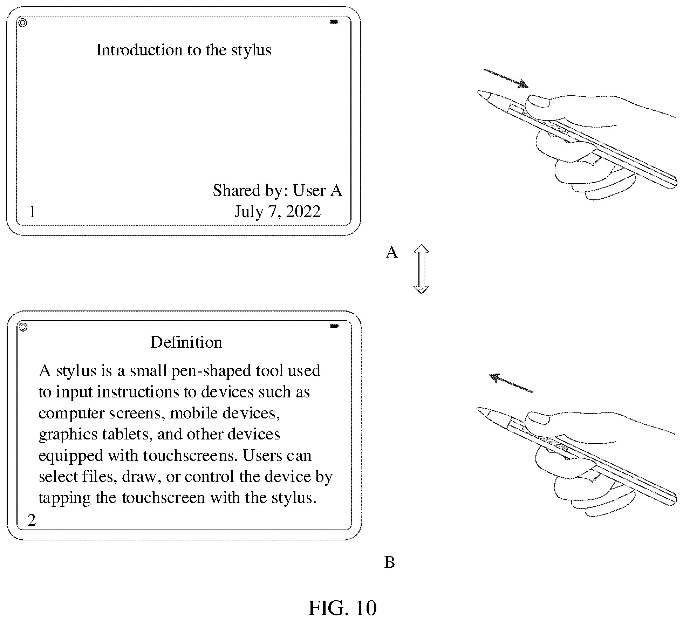

In this embodiment of this application, in the page flipping stylus mode, a plurality of manners for controlling the electronic device by using the stylus may be provided. For example, the user may simulate a laser pointer based on the trigger operation on the stylus, to display a laser spot in the electronic device (refer to the embodiment corresponding to FIG. 9). Alternatively, the user may implement page flipping control on the electronic device based on the trigger operation performed by the user on the stylus (refer to the embodiment corresponding to FIG. 10).

In an implementation, the user may simulate the laser pointer based on the trigger operation on the stylus, to display the laser spot in the electronic device.

For example, FIG. 9 is a schematic diagram of scenarios in which a laser pointer is simulated based on a stylus according to an embodiment of this application.

In the scenario shown in a in FIG. 9, when the stylus receives, in the step shown in S704, a press operation (or a long press operation) or the like performed by the user in the preset region, the stylus may send an identification result corresponding to the press operation to the electronic device through S705, so that the electronic device displays a laser spot 901 in the step shown in S706. The user may simulate the laser pointer by using the stylus, and provide a visualization demonstration during service presentation.

In an interface displayed on the electronic device shown in a in FIG. 9, the interface may be a first slide, and the interface may include the laser spot 901 that indicates information that a page is page 1, text information displayed as an introduction to the stylus, information displayed as shared by: user A, and time information that indicates that the time is July 7, 2022.

In a possible implementation, in the scenario shown in b in FIG. 9, when the user ends the press operation on the preset region of the stylus, the electronic device may cancel displaying the laser spot.

It may be understood that the user may simulate, based on the press operation on the preset region of the stylus, the laser pointer to display the laser spot in the electronic device, and improve accuracy of press operation identification.

In another implementation, the user may alternatively implement page flipping control on the electronic device based on the trigger operation performed by the user on the stylus.

For example, FIG. 10 is a schematic diagram of scenarios in which page flipping is controlled based on a stylus according to an embodiment of this application.

In the scenario shown in a in FIG. 10, when the stylus receives, in the step shown in S704, a slide operation that is performed by the user in the preset region and that is toward a position away from a tip of the stylus, the stylus may send an identification result corresponding to the slide operation to the electronic device through S705, so that the electronic device performs page flipping in the step shown in S706. For example, the electronic device may implement flipping to a next page. In this case, the electronic device may switch from an interface displayed on the electronic device shown in a in FIG. 10 to an interface displayed on the electronic device shown in b in FIG. 10.

In the scenario shown in b in FIG. 10, when the stylus receives, in the step shown in S704, a slide operation that is performed by the user in the preset region and that is toward a position close to a tip of the stylus, the stylus may send an identification result corresponding to the slide operation to the electronic device through S705, so that the electronic device performs page flipping in the step shown in S706. For example, the electronic device may implement flipping to a previous page. In this case, the electronic device may switch from an interface displayed on the electronic device shown in a in FIG. 10 to an interface displayed on the electronic device shown in b in FIG. 10. The interface displayed on the electronic device shown in b in FIG. 10 may include information that indicates a page 2, an introduction to a definition of the stylus, and the like.

In a possible implementation, when the user adsorbs the stylus to a bottom of the electronic device, or the user disables a switch of demonstrating the page flipping stylus mode in the interface shown in b in FIG. 8, or the user taps the touch film for a plurality of times in the stylus, the stylus may exit the page flipping stylus mode.

It may be understood that the user may control, based on the slide operation on the preset region of the stylus, the electronic device to perform page flipping, and improve accuracy of page flipping identification.

It may be understood that the stylus may alternatively control the electronic device based on an orientation of the tip of the stylus. In the interface shown in a in FIG. 10 and the interface shown in b in FIG. 10, when the tip of the stylus faces up and when the stylus receives the slide operation that is performed by the user in the preset region and that is toward the position away from the tip of the stylus, the stylus may control the electronic device to flip to a next page. Alternatively, when the tip of the stylus faces up and when the stylus receives the slide operation that is performed by the user in the preset region and that is toward the position close to the tip of the stylus, the stylus may control the electronic device to flip to a previous page. A gyroscope sensor or the like for detecting an orientation of the stylus may be disposed in the stylus.

In a possible implementation, when the tip of the stylus faces down and when the stylus receives the slide operation that is performed by the user in the preset region and that is toward the position close to the tip of the stylus, the stylus may control the electronic device to flip to a next page. Alternatively, when the tip of the stylus faces down and when the stylus receives the slide operation that is performed by the user in the preset region and that is toward the position away from the tip of the stylus, the stylus may control the electronic device to flip to a previous page.

It may be understood that the control of the electronic device by the stylus in different orientations of the stylus and based on different trigger operations on the preset region in different orientations is merely used as an example, which shall not be construed as a limitation on embodiments of this application.

Based on the content described in the embodiment corresponding to FIG. 7, in this embodiment of this application, based on identification, by the stylus, of an operation on the preset region of the touch film, a false touch caused when the user triggers another position of the touch film can be avoided, and accuracy of controlling the electronic device by the user by using the stylus can be improved.

In a possible implementation, when document content, web content, or the like is displayed on the electronic device, the stylus may alternatively implement continuous page flipping control on a cursor in the electronic device, or for the document content, the web content, or the like.

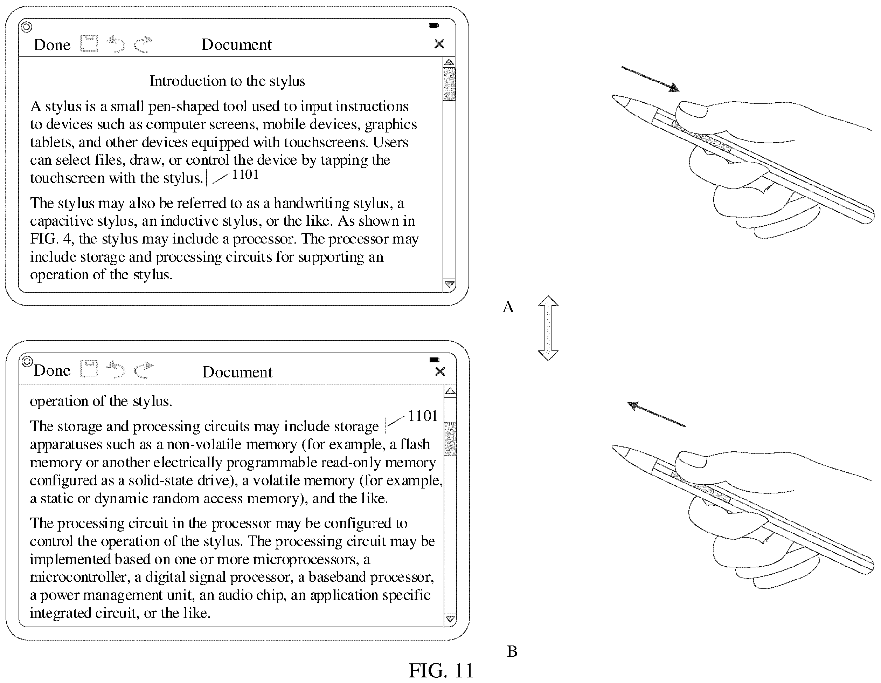

For example, FIG. 11 is a schematic diagram of other scenarios in which page flipping is controlled based on a stylus according to an embodiment of this application.

In the scenario shown in a in FIG. 11, the electronic device may display document content, and the document content may include a cursor 1101. The interface displayed on the electronic device may further include a control that indicates to complete document editing, a save control, an undo control, a redo control, a control for exiting a document, a control for flipping to a previous page, a control for flipping to a next page, an identifier that indicates a position of currently displayed content in the document, and the like. Document content displayed on the electronic device in the scenario shown in b in FIG. 11 may be different from the document content displayed on the electronic device in the scenario shown in a in FIG. 11.

In the scenario shown in a in FIG. 11, when the stylus receives, in the step shown in S704, a slide operation that is performed by the user in the preset region and that is toward a position away from a tip of the stylus, the stylus may send an identification result corresponding to the slide operation to the electronic device through S705, so that the electronic device continuously moves down or controls the cursor to continuously move down in the step shown in S706. Further, when the user stops the operation on the preset region, the electronic device may end control on the cursor. For example, the electronic device may control movement of the cursor based on the slide operation performed by the user on the stylus. For example, the electronic device may display an interface displayed on the electronic device shown in a in FIG. 11 when the user does not perform an operation on the stylus, and display an interface displayed on the electronic device shown in b in FIG. 11 when the user ends the operation on the stylus. It may be understood that the movement of the cursor drives a change of display content on a page.

In a possible implementation, when the stylus receives the slide operation that is performed by the user in the preset region and that is toward the position away from the tip of the stylus, the stylus may alternatively control a page displayed on the electronic device to be continuously flipped to next pages. Further, when the user stops the operation on the preset region, the electronic device may end the page flipping operation.

Accordingly, in the scenario shown in b in FIG. 11, when the stylus receives, in the step shown in S704, a slide operation that is performed by the user in the preset region and that is toward a position close to a tip of the stylus, the stylus may send an identification result corresponding to the slide operation to the electronic device through S705, so that the electronic device continuously moves up or controls the cursor to continuously move up in the step shown in S706. Further, when the user stops the operation on the preset region, the electronic device may end control on the cursor. For example, the electronic device may control movement of the cursor based on the slide operation performed by the user on the stylus. For example, the electronic device may display an interface displayed on the electronic device shown in b in FIG. 11 when the user does not perform an operation on the stylus, and display an interface displayed on the electronic device shown in a in FIG. 11 when the user ends the operation on the stylus.

In a possible implementation, when the stylus receives the slide operation that is performed by the user in the preset region and that is toward the position close to the tip of the stylus, the stylus may alternatively control a page displayed on the electronic device to be continuously flipped to previous pages. Further, when the user stops the operation on the preset region, the electronic device may end the page flipping operation. A specific process is similar to a manner in which the stylus controls the movement of the cursor in the electronic device. Details are not described herein again.

In a possible implementation, the stylus may alternatively control the electronic device based on an orientation of the tip of the stylus. In the interface shown in a in FIG. 11 and the interface shown in b in FIG. 11, when the tip of the stylus faces up and when the stylus receives the slide operation that is performed by the user in the preset region and that is toward the position away from the tip of the stylus, the stylus may control the page displayed on the electronic device to be continuously flipped to next pages (or the cursor displayed on the electronic device continuously moves down). Alternatively, when the tip of the stylus faces up and when the stylus receives the slide operation that is performed by the user in the preset region and that is toward the position close to the tip of the stylus, the stylus may control the page displayed on the electronic device to be continuously flipped to previous pages (or the cursor displayed on the electronic device continuously moves up).

In a possible implementation, when the tip of the stylus faces down and when the stylus receives the slide operation that is performed by the user in the preset region and that is toward the position close to the tip of the stylus, the stylus may control the page displayed on the electronic device to be continuously flipped to next pages (or the cursor displayed on the electronic device continuously moves down). Alternatively, when the tip of the stylus faces up and when the stylus receives the slide operation that is performed by the user in the preset region and that is toward the position away from the tip of the stylus, the stylus may control the page displayed on the electronic device to be continuously flipped to previous pages (or the cursor displayed on the electronic device continuously moves up).

On this basis, based on the identification, by the stylus, of the operation on the preset region of the touch film and the orientation of the stylus, a false touch caused when the user triggers another position of the touch film can be avoided, and accuracy of controlling the electronic device by the user by using the stylus can be improved.

It may be understood that the interface provided in this embodiment of this application is merely used as an example, which shall not be construed as a limitation on embodiments of this application.

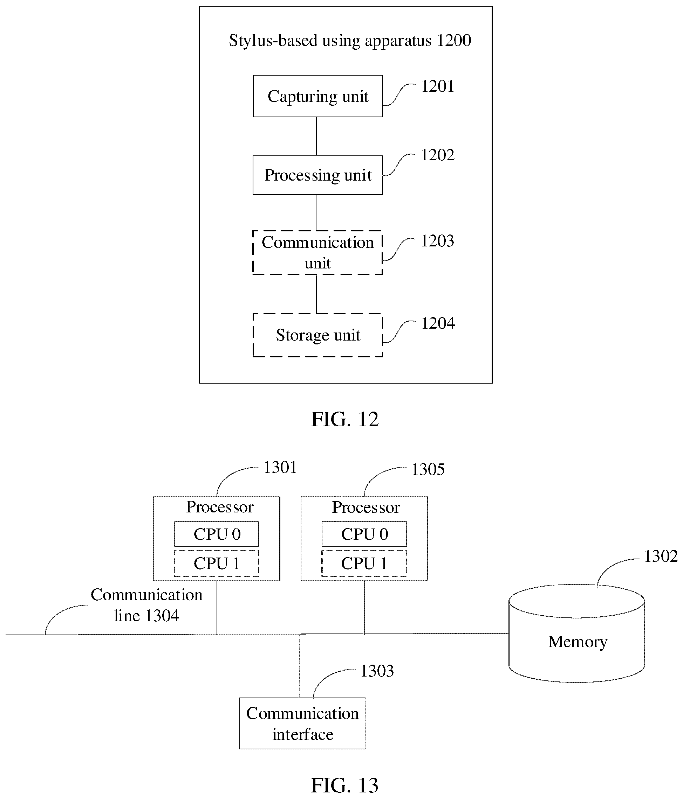

The method provided in embodiments of this application is described above with reference to FIG. 6 to FIG. 11. An apparatus for performing the method in embodiments of this application is described below. FIG. 12 is a schematic diagram of a structure of a stylus-based using apparatus according to an embodiment of this application. The stylus-based using apparatus may be a wearable device in this embodiment of this application, or may be a chip or a chip system in the wearable device.

As shown in FIG. 12, a stylus-based using apparatus 1200 may be used in a communication device, a circuit, a hardware component, or a chip, and the stylus-based using apparatus includes an identification unit 1201 and a processing unit 1202. The identification unit 1201 is configured to support the stylus-based using apparatus 1200 to perform a step of data identification. The processing unit 1202 is configured to support the stylus-based using apparatus 1200 to perform a step of data processing.

Specifically, this embodiment of this application provides the stylus-based using apparatus 1200. A part or all of a body of the stylus is surrounded by a touch film. A facet is disposed on the body of the stylus. The touch film includes a first region. The first region is smaller than a body region covered by the touch film and the first region is located at a position in the facet. When the processing unit 1202 receives a first operation on the first region, the identification unit 1201 is configured to identify the first operation to obtain an identification result, and the processing unit 1202 is configured to control a target device based on the identification result. The target device establishes a communication connection to the stylus.

In a possible implementation, the stylus-based using apparatus 1200 may further include a communication unit 1203. Specifically, the communication unit 1203 is configured to support the stylus-based using apparatus 1200 to perform steps of data sending and data receiving. For example, the communication unit 1203 may be an input interface or an output interface, a pin, a circuit, or the like.

In a possible embodiment, the stylus-based using apparatus 1200 may further include a storage unit 1204. The processing unit 1202 and the storage unit 1204 are connected to each other by using a line. The storage unit 1204 may include one or more memories. The memory may be one or more components that are in a device or a circuit and that are configured to store a program or data. The storage unit 1204 may exist independently, and is connected to the processing unit 1202 included in the stylus-based using apparatus by using a communication line. The storage unit 1204 may alternatively be integrated with the processing unit 1202.

The storage unit 1204 may store computer-executable instructions of the method of the wearable device, so that the processing unit 1202 performs the method in the foregoing embodiments. The storage unit 1204 may be a register, a cache, a RAM, or the like, and the storage unit 1204 may be integrated with the processing unit 1202. The storage unit 1204 may be a read-only memory (read-only memory, ROM) or another type of static storage device that may store static information and instructions. The storage unit 1204 may be independent of the processing unit 1202.

FIG. 13 is a schematic diagram of a hardware structure of another stylus according to an embodiment of this application. As shown in FIG. 13, the stylus includes a processor 1301, a communication line 1304, and at least one communication interface (for example, a communication interface 1303 is used as an example for description in FIG. 13).

The processor 1301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1304 may include a circuit for transmitting information between the foregoing components.

The communication interface 1303 is an apparatus using any transceiver or the like to communicate with another device or a communication network, such as an Ethernet or a wireless local area network (wireless local area network, WLAN).

Possibly, the stylus may further include a memory 1302.

The memory 1302 may be a read-only memory (read-only memory, ROM) or another type of static storage device capable of storing static information and an instruction, a random access memory (random access memory, RAM) or another type of dynamic storage device capable of storing information and an instruction, an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a blue-ray optical disc, and the like), a magnetic disk storage medium or another magnetic storage device, or any other medium capable of carrying or storing expected program code in a form of an instruction or a data structure and capable of being stored and accessed by a computer. However, the memory is not limited thereto. The memory may exist independently, and is connected to the processor by the communication line 1304. The memory may alternatively be integrated with the processor.

The memory 1302 is configured to store computer-executable instructions for performing the solutions in this application, and execution of the computer-executable instructions is controlled by the processor 1301. The processor 1301 is configured to execute the computer-executable instructions stored in the memory 1302, to implement the wear detection method provided in embodiments of this application.

Possibly, the computer-executable instructions in this embodiment of this application may also be referred to as application code. This is not specifically limited in embodiments of this application.

During specific implementation, in an embodiment, the processor 1301 may include one or more CPUs, such as a CPU 0 and a CPU 1 in FIG. 13.

During specific implementation, in an embodiment, the stylus may include a plurality of processors, such as the processor 1301 and a processor 1305 in FIG. 13. Each of these processors may be a single-core (single-CPU) processor, or may be a multi-core (multi-CPU) processor. The processor herein may be one or more devices or circuits, and/or a processing core configured to process data (for example, computer program instructions).

A computer program product includes one or more computer instructions. When the computer program instructions are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, including one or more usable media. For example, the usable medium may include a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

An embodiment of this application further provides a system. The system includes a stylus and a target device. The target device establishes a communication connection to the stylus. A part or all of a body of the stylus is surrounded by a touch film. A facet is disposed on the body of the stylus. The touch film includes a first region. The first region is smaller than a body region covered by the touch film and the first region is located at a position in the facet. The stylus is configured to: when receiving a first operation on the first region, identify the first operation to obtain an identification result. The stylus is further configured to send the identification result to the target device. The target device is configured to: receive the identification result, and control the target device based on the identification result.

An embodiment of this application further provides a computer-readable storage medium. All or some of methods in the foregoing embodiments may be implemented by using software, hardware, firmware, or any combination thereof. The computer-readable medium may include a computer storage medium and a communication medium, and may further include any medium that can transmit a computer program from one place to another. The storage medium may be any target medium accessible by a computer.

In a possible design, the computer-readable medium may include a compact disc read-only memory (compact disc read-only memory, CD-ROM), a RAM, a ROM, an EEPROM, or another optical disc memory. The computer-readable medium may include a magnetic disk memory or another magnetic disk storage device. In addition, any connection line may also be appropriately referred to as a computer-readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc (CD), a laser disc, an optical disc, a digital versatile disc (digital versatile disc, DVD), a floppy disk, and a blue ray disc. The magnetic disk generally reproduces data in a magnetic manner, and the optical disc reproduces data optically by using laser.

The foregoing combination should also be included in the scope of the computer-readable medium. The protection scope of the present invention shall be subject to the protection scope of the claims.

## Claims

1. A system, wherein the system comprises a stylus (100) and an electronic device (200) establishing a communication connection to the stylus (100);
a touch film is disposed on at least a part of a body of the stylus (100), the touch film comprises a first region (602) and a second region, the first region (602) is smaller than a body region that is of the stylus (100) and that corresponds to the touch film, and the second region is another region that is of the touch film and that is other than the first region (602);
in a first mode, the stylus (100) is configured to perform writing in a touchscreen of the electronic device (200), and the system is capable of responding to, in a first application, a first operation performed by a user at any position of the touch film; and
in a second mode, the system is capable of responding to, in a second application, a second operation performed by the user in the first region (602), wherein the system skips responding to, in the second application, the second operation performed by the user in the second region, wherein
the first mode is different from the second mode; and
the first operation is different from the second operation,
wherein the first mode is a writing mode, and the second mode is a page flipping stylus mode; wherein the first application is an application for performing writing, and the second application is an application for projecting a slide,
wherein a facet (601) is disposed on the body of the stylus (100), and the first region (602) is located at a position in the facet (601), and wherein the first region (602) is a strip region disposed at the facet (601) of the body of the stylus (100).

2. The system according to claim 1, wherein the second operation is a slide operation.

3. The system according to claim 2, wherein that the system is capable of responding to, in a second application, a second operation performed by the user in the first region (602) comprises that the stylus (100) is capable of identifying the slide operation performed by the user in the first region (602), and a display page of the electronic device (200) is flipped in response to the slide operation.

4. The system according to claim 1, wherein the second operation is a long press operation.

5. The system according to claim 4, wherein that the system is capable of responding to, in a second application, a second operation performed by the user in the first region (602) comprises that the stylus (100) is capable of identifying the long press operation performed by the user in the first region (602), and a display page of the electronic device (200) displays a laser spot in response to the long press operation.

6. The system according to any one of claims 1 to 5, wherein the first operation comprises a tap operation.

7. The system according to claim 6, wherein that the system is capable of responding to, in a first application, a first operation performed by a user at any position of the touch film comprises that the stylus (100) is capable of identifying the tap operation performed by the user at any position of the touch film, and the first mode is switched to the second mode.

8. The system according to any one of claims 1 to 7, wherein
that the system is capable of responding to, in a second application, a second operation performed by the user in the first region (602) comprises:
the electronic device (200) is capable of receiving a first message sent by the stylus (100), wherein the first message indicates an identification result that an operation performed by the user is the second operation; and
the electronic device (200) is capable of controlling display content of the electronic device (200) based on the identification result.

9. A display method, wherein the method is applied to a system comprising a stylus (100) and an electronic device (200), a touch film is disposed on at least a part of a body of the stylus (100), the touch film comprises a first region (602) and a second region, the first region (602) is smaller than a body region that is of the stylus (100) and that corresponds to the touch film, and the second region is another region that is of the touch film and that is other than the first region (602), wherein a facet (601) is disposed on the body of the stylus (100), and the first region (602) is located at a position in the facet (601), and wherein the first region (602) is a strip region disposed at the facet (601) of the body of the stylus (100); and the method comprises:
establishing, by the electronic device (200), a communication connection to the stylus (100) (S701);
in a first mode, performing writing, by the stylus (100), in a touchscreen of the electronic device (200), and responding to, by the system in a first application, a first operation performed by a user at any position of the touch film; and
in a second mode, responding to, by the system in a second application, a second operation performed by the user in the first region (602), wherein the system skips responding to, in the second application, the second operation performed by the user in the second region, wherein
the first mode is different from the second mode; and
the first operation is different from the second operation,
wherein the first mode is a writing mode, and the second mode is a page flipping stylus mode; wherein the first application is an application for performing writing, and the second application is an application for projecting a slide.

10. The method according to claim 9, wherein the first operation comprises a tap operation and the second operation is a slide operation.

11. The method according to claim 10, wherein that the responding to, by the system in a second application, a second operation performed by the user in the first region (602) comprises that the stylus (100) identifies the slide operation performed by the user in the first region (602), and a display page of the electronic device (200) is flipped in response to the slide operation (S706).

12. The method according to claim 10, wherein that the responding to, by the system in a first application, a first operation performed by the user comprises that the stylus (100) identifies the tap operation performed by the user at any position of the touch film, and the first mode is switched to the second mode (S704).

## Patentansprüche

1. System, wobei das System einen Stylus (100) und eine elektronische Vorrichtung (200) umfasst, die eine Kommunikationsverbindung mit dem Stylus (100) herstellt;
eine Berührungsfolie auf mindestens einem Teil eines Körpers des Stylus (100) angeordnet ist, die Berührungsfolie einen ersten Bereich (602) und einen zweiten Bereich umfasst, der erste Bereich (602) kleiner ist als ein Körperbereich des Stylus (100), der der Berührungsfolie entspricht, und der zweite Bereich ein anderer Bereich der Berührungsfolie ist, der von dem ersten Bereich (602) verschieden ist;
in einem ersten Modus der Stylus (100) dazu konfiguriert ist, Schreiben auf einem Touchscreen der elektronischen Vorrichtung (200) durchzuführen, und das System in der Lage ist, in einer ersten Anwendung auf eine erste Operation zu reagieren, die durch einen Benutzer an einer beliebigen Position der Berührungsfolie durchgeführt wird; und
in einem zweiten Modus das System in der Lage ist, in einer zweiten Anwendung auf eine zweite Operation zu reagieren, die durch den Benutzer im ersten Bereich (602) durchgeführt wird, wobei das System davon absieht, in der zweiten Anwendung auf die durch den Benutzer im zweiten Bereich durchgeführte zweite Operation zu reagieren, wobei
der erste Modus von dem zweiten Modus verschieden ist; und
die erste Operation von der zweiten Operation verschieden ist,
wobei der erste Modus ein Schreibmodus ist und der zweite Modus ein Seitenumblätter-Stiftmodus ist; wobei die erste Anwendung eine Anwendung zum Durchführen von Schreiben ist und die zweite Anwendung eine Anwendung zum Projizieren einer Folie ist,
wobei eine Facette (601) auf dem Körper des Stylus (100) angeordnet ist und der erste Bereich (602) sich an einer Position in der Facette (601) befindet, und wobei der erste Bereich (602) ein streifenförmiger Bereich ist, der an der Facette (601) des Körpers des Stylus (100) angeordnet ist.

2. System nach Anspruch 1, wobei die zweite Operation eine Wischoperation ist.

3. System nach Anspruch 2, wobei, dass das System in der Lage ist, in einer zweiten Anwendung auf eine zweite Operation zu reagieren, die durch den Benutzer im ersten Bereich (602) durchgeführt wird, umfasst, dass der Stylus (100) in der Lage ist, die durch den Benutzer im ersten Bereich (602) durchgeführte Wischoperation zu identifizieren, und eine Anzeigeseite der elektronischen Vorrichtung (200) als Reaktion auf die Wischoperation umgeblättert wird.

4. System nach Anspruch 1, wobei die zweite Operation eine Operation des langen Drückens ist.

5. System nach Anspruch 4, wobei, dass das System in der Lage ist, in einer zweiten Anwendung auf eine zweite Operation zu reagieren, die durch den Benutzer im ersten Bereich (602) durchgeführt wird, umfasst, dass der Stylus (100) in der Lage ist, die durch den Benutzer im ersten Bereich (602) durchgeführte Operation des langen Drückens zu identifizieren, und eine Anzeigeseite der elektronischen Vorrichtung (200) als Reaktion auf die Operation des langen Drückens einen Laserpunkt anzeigt.

6. System nach einem der Ansprüche 1 bis 5, wobei die erste Operation eine Antippoperation umfasst.

7. System nach Anspruch 6, wobei, dass das System in der Lage ist, in einer ersten Anwendung auf eine erste Operation zu reagieren, die durch einen Benutzer an einer beliebigen Position der Berührungsfolie durchgeführt wird, umfasst, dass der Stylus (100) in der Lage ist, die durch den Benutzer an einer beliebigen Position der Berührungsfolie durchgeführte Antippoperation zu identifizieren, und der erste Modus in den zweiten Modus umgeschaltet wird.

8. System nach einem der Ansprüche 1 bis 7, wobei
dass das System in der Lage ist, in einer zweiten Anwendung auf eine zweite Operation zu reagieren, die durch den Benutzer im ersten Bereich (602) durchgeführt wird, Folgendes umfasst:
die elektronische Vorrichtung (200) in der Lage ist, eine von dem Stylus (100) gesendete erste Nachricht zu empfangen, wobei die erste Nachricht ein Identifikationsergebnis angibt, dass eine durch den Benutzer durchgeführte Operation die zweite Operation ist; und
die elektronische Vorrichtung (200) in der Lage ist, Anzeigeinhalt der elektronischen Vorrichtung (200) basierend auf dem Identifikationsergebnis zu steuern.

9. Anzeigeverfahren, wobei das Verfahren auf ein System angewendet wird, das einen Stylus (100) und eine elektronische Vorrichtung (200) umfasst, eine Berührungsfolie auf mindestens einem Teil eines Körpers des Stylus (100) angeordnet ist, die Berührungsfolie einen ersten Bereich (602) und einen zweiten Bereich umfasst, der erste Bereich (602) kleiner ist als ein Körperbereich des Stylus (100), der der Berührungsfolie entspricht, und der zweite Bereich ein anderer Bereich der Berührungsfolie ist, der von dem ersten Bereich (602) verschieden ist, wobei eine Facette (601) auf dem Körper des Stylus (100) angeordnet ist und der erste Bereich (602) sich an einer Position in der Facette (601) befindet, und wobei der erste Bereich (602) ein streifenförmiger Bereich ist, der an der Facette (601) des Körpers des Stylus (100) angeordnet ist; und das Verfahren Folgendes umfasst:
Herstellen, durch die elektronische Vorrichtung (200), einer Kommunikationsverbindung mit dem Stylus (100) (S701);
in einem ersten Modus, Durchführen von Schreiben, durch den Stylus (100), auf einem Touchscreen der elektronischen Vorrichtung (200), und Reagieren, durch das System in einer ersten Anwendung, auf eine erste Operation, die durch einen Benutzer an einer beliebigen Position der Berührungsfolie durchgeführt wird; und
in einem zweiten Modus, Reagieren, durch das System in einer zweiten Anwendung, auf eine zweite Operation, die durch den Benutzer im ersten Bereich (602) durchgeführt wird, wobei das System davon absieht, in der zweiten Anwendung auf die durch den Benutzer im zweiten Bereich durchgeführte zweite Operation zu reagieren, wobei
der erste Modus von dem zweiten Modus verschieden ist; und
die erste Operation von der zweiten Operation verschieden ist,
wobei der erste Modus ein Schreibmodus ist und der zweite Modus ein Seitenumblätter-Stiftmodus ist; wobei die erste Anwendung eine Anwendung zum Durchführen von Schreiben ist und die zweite Anwendung eine Anwendung zum Projizieren einer Folie ist.

10. Verfahren nach Anspruch 9, wobei die erste Operation eine Antippoperation umfasst und die zweite Operation eine Wischoperation ist.

11. Verfahren nach Anspruch 10, wobei, dass das Reagieren, durch das System in einer zweiten Anwendung, auf eine zweite Operation, die durch den Benutzer im ersten Bereich (602) durchgeführt wird, umfasst, dass der Stylus (100) die durch den Benutzer im ersten Bereich (602) durchgeführte Wischoperation identifiziert, und eine Anzeigeseite der elektronischen Vorrichtung (200) als Reaktion auf die Wischoperation umgeblättert wird (S706).

12. Verfahren nach Anspruch 10, wobei, dass das Reagieren, durch das System in einer ersten Anwendung, auf eine erste durch den Benutzer an einer beliebigen Position der Berührungsfolie durchgeführte Operation umfasst, dass der Stylus (100) die durch den Benutzer an einer beliebigen Position der Berührungsfolie durchgeführte Antippoperation identifiziert, und der erste Modus in den zweiten Modus umgeschaltet wird (S704).

## Revendications

1. Système, dans lequel le système comprend un stylet (100) et un dispositif électronique (200) établissant une connexion de communication avec le stylet (100) ;
un film tactile est disposé sur au moins une partie d'un corps du stylet (100), le film tactile comprend une première région (602) et une deuxième région, la première région (602) est plus petite qu'une région de corps du stylet (100) qui correspond au film tactile, et la deuxième région est une autre région du film tactile qui est autre que la première région (602) ;
dans un premier mode, le stylet (100) est configuré pour effectuer une écriture sur un écran tactile du dispositif électronique (200), et le système est capable de répondre, dans une première application, à une première opération effectuée par un utilisateur en toute position du film tactile ; et
dans un deuxième mode, le système est capable de répondre, dans une deuxième application, à une deuxième opération effectuée par l'utilisateur dans la première région (602), dans lequel le système s'abstient de répondre, dans la deuxième application, à la deuxième opération effectuée par l'utilisateur dans la deuxième région, dans lequel
le premier mode est différent du deuxième mode ; et
la première opération est différente de la deuxième opération,
dans lequel le premier mode est un mode d'écriture, et le deuxième mode est un mode stylet de changement de page ; dans lequel la première application est une application pour effectuer une écriture, et la deuxième application est une application pour projeter une diapositive,
dans lequel une facette (601) est disposée sur le corps du stylet (100), et la première région (602) est située au niveau d'une position dans la facette (601), et dans lequel la première région (602) est une région en bande disposée au niveau de la facette (601) du corps du stylet (100).

2. Système selon la revendication 1, dans lequel la deuxième opération est une opération de glissement.

3. Système selon la revendication 2, dans lequel le fait que le système est capable de répondre, dans une deuxième application, à une deuxième opération effectuée par l'utilisateur dans la première région (602) comprend le fait que le stylet (100) est capable d'identifier l'opération de glissement effectuée par l'utilisateur dans la première région (602), et une page d'affichage du dispositif électronique (200) est tournée en réponse à l'opération de glissement.

4. Système selon la revendication 1, dans lequel la deuxième opération est une opération d'appui long.

5. Système selon la revendication 4, dans lequel le fait que le système est capable de répondre, dans une deuxième application, à une deuxième opération effectuée par l'utilisateur dans la première région (602) comprend le fait que le stylet (100) est capable d'identifier l'opération d'appui long effectuée par l'utilisateur dans la première région (602), et une page d'affichage du dispositif électronique (200) affiche un point laser en réponse à l'opération d'appui long.

6. Système selon l'une quelconque des revendications 1 à 5, dans lequel la première opération comprend une opération de tapotement.

7. Système selon la revendication 6, dans lequel le fait que le système est capable de répondre, dans une première application, à une première opération effectuée par un utilisateur en toute position du film tactile comprend le fait que le stylet (100) est capable d'identifier l'opération de tapotement effectuée par l'utilisateur en toute position du film tactile, et le premier mode est commuté vers le deuxième mode.

8. Système selon l'une quelconque des revendications 1 à 7, dans lequel
le fait que le système est capable de répondre, dans une deuxième application, à une deuxième opération effectuée par l'utilisateur dans la première région (602) comprend :
le dispositif électronique (200) est capable de recevoir un premier message envoyé par le stylet (100), dans lequel le premier message indique un résultat d'identification selon lequel une opération effectuée par l'utilisateur est la deuxième opération ; et
le dispositif électronique (200) est capable de commander un contenu d'affichage du dispositif électronique (200) sur la base du résultat d'identification.

9. Procédé d'affichage, dans lequel le procédé est appliqué à un système comprenant un stylet (100) et un dispositif électronique (200), un film tactile est disposé sur au moins une partie d'un corps du stylet (100), le film tactile comprend une première région (602) et une deuxième région, la première région (602) est plus petite qu'une région de corps du stylet (100) qui correspond au film tactile, et la deuxième région est une autre région du film tactile qui est autre que la première région (602), dans lequel une facette (601) est disposée sur le corps du stylet (100), et la première région (602) est située au niveau d'une position dans la facette (601), et dans lequel la première région (602) est une région en bande disposée au niveau de la facette (601) du corps du stylet (100) ; et le procédé comprend :
l'établissement, par le dispositif électronique (200), d'une connexion de communication avec le stylet (100) (S701) ;
dans un premier mode, l'exécution d'une écriture, par le stylet (100), sur un écran tactile du dispositif électronique (200), et la réponse, par le système dans une première application, à une première opération effectuée par un utilisateur en toute position du film tactile ; et
dans un deuxième mode, la réponse, par le système dans une deuxième application, à une deuxième opération effectuée par l'utilisateur dans la première région (602), dans lequel le système s'abstient de répondre, dans la deuxième application, à la deuxième opération effectuée par l'utilisateur dans la deuxième région, dans lequel
le premier mode est différent du deuxième mode ; et
la première opération est différente de la deuxième opération,
dans lequel le premier mode est un mode d'écriture, et le deuxième mode est un mode stylet de changement de page ; dans lequel la première application est une application pour effectuer une écriture, et la deuxième application est une application pour projeter une diapositive.

10. Procédé selon la revendication 9, dans lequel la première opération comprend une opération de tapotement et la deuxième opération est une opération de glissement.

11. Procédé selon la revendication 10, dans lequel la réponse, par le système dans une deuxième application, à une deuxième opération effectuée par l'utilisateur dans la première région (602), comprend le fait que le stylet (100) identifie l'opération de glissement effectuée par l'utilisateur dans la première région (602), et une page d'affichage du dispositif électronique (200) est tournée en réponse à l'opération de glissement (S706).

12. Procédé selon la revendication 10, dans lequel la réponse, par le système dans une première application, à une première opération effectuée par l'utilisateur en toute position du film tactile, comprend le fait que le stylet (100) identifie l'opération de tapotement effectuée par l'utilisateur en toute position du film tactile, et le premier mode est commuté vers le deuxième mode (S704).
